# EUROPÄISCHE PATENTSCHRIFT

(11) **EP 1 147 829 B1**
(45) Veröffentlichungstag und Bekanntmachung des Hinweises auf die Patenterteilung: **10.08.2005**
(21) Anmeldenummer: 01106881.4
(22) Anmeldetag: 20.03.2001
(51) Int. Cl.: B21B 31/07, B21B 37/00, F16C 17/24

(54) **Verfahren und Vorrichtung zum Überwachen einer Lageranordnung**
Method and device for monitoring a bearing arrangement
Procédé et système permettant de contrôler un ensemble palier

(30) Priorität: 19.04.2000 DE 10019324
(43) Veröffentlichungstag der Anmeldung: 24.10.2001
(73) Patentinhaber: SKF GmbH, 97421 Schweinfurt (DE)
(72) Erfinder: Bode, Jens, 63303 Dreieich (DE)
(74) Vertreter: Gosdin, Michael, Dr.

(56) Entgegenhaltungen:
- EP-B- 0 297 729
- WO-A-86/04138
- DE-A- 19 722 970
- US-A- 5 060 760

## Beschreibung

Die Erfindung betrifft ein Verfahren zum Überwachen einer Lageranordnung mit mindestens einem Lager in einem Gehäuse einer Walzenzapfenlagerung einer Wälze in einer Stranggießanlage. Des weiteren betrifft die Erfindung eine Vorrichtung zum Überwachen einer Lageranordnung.

In einer Stranggießanlage wird vertikal von oben kommendes, vorgeformtes und noch heißes Metall aus einer Kokille um 90° umgelenkt und einer weiteren Bearbeitung - dann in horizontaler Richtung - zugeleitet. Das die Kokille verlassende Metall ist zwar noch heiß, aber bereits soweit verfestigt, daß nennenswerte Kräfte aufgebracht werden müssen, um die 90°-Umlenkung von der Vertikalen in die Horizontale zu bewerkstelligen. Zu diesem Zweck ist eine Walzenanordnung vorgesehen, die eine Vielzahl von Walzen aufweist und das allmähliche "Umbiegen" des Metallstrangs veranlaßt.

Die zum Einsatz kommenden Walzen sind in einem entsprechenden Gerüst angeordnet; die Walzen weisen dabei an ihren beiden Enden je einen Zapfen auf, der in einem Gehäuse gelagert ist. Zwischen Gehäuse und Walzenzapfen ist eine Lageranordnung vorgesehen.

Die Qualität des Stranggießprozesses sowie dessen Wirtschaftlichkeit wird im wesentlichen von der Funktionsfähigkeit der Lageranordnung bestimmt. Es muß daher sichergestellt werden, daß im Laufe der Zeit keine Lagerschäden entstehen; dem kann durch eine vorbeugende Instandhaltung in festgelegten Zeitintervallen begegnet werden.

Dies führt jedoch in nachteilhafter Weise dazu, daß mitunter vorbeugende Instandhaltungsmaßnahmen durchgeführt werden, während das Lager dies noch nicht notwendigerweise benötigt.

DE-A-19722970 beschreibt die Überwachung von Lagerstellen durch Sensoren die Temperatur, Schall oder Vibration des Lagers erfassen.

Der Erfindung liegt daher die **Aufgabe** zugrunde, ein Verfahren und eine zugehörige Vorrichtung zum Überwachen einer Lageranordnung einer Walzenzapfenlagerung einer Walze in einer Stranggießanlage zu schaffen, mit dem bzw. mit der es möglich ist, die Instandhaltung bzw. Wartung oder Erneuerung einer Lageranordnung sowie ihres Umfeldes so zu steuern, daß nur bei wirklichem Bedarf tatsächlich eine Instandhaltungsmaßnahme ausgelöst wird.

Die **Lösung** dieser Aufgabe durch die Erfindung ist verfahrensgemäß durch die Merkmale des Anspruchs 1 definiert.

Die Erfindung stellt also auf den Gedanken ab, daß eine Prozeßgröße, die für die Funktionsfähigkeit bzw. Betriebsfestigkeit der Lageranordnung einer Walzenzapfenlagerung einer Walze in einer Stranggießanlage charakteristisch ist, mittels eines geeigneten Sensors überwacht und permanent mit einem gespeicherten Maximal- bzw. Minimalwert verglichen wird, der als noch gerade möglicher Grenzwert für einen ordnungsgemäßen Betrieb der Lageranordnung in einem Speicher hinterlegt ist. Durch Vergleich des Istwerts mit dem Sollwert kann dann beim Verlassen eines zulässigen Toleranzbereichs ein Signal ausgelöst werden, das dem Betriebspersonal der Stranggießanlage einen Hinweis darauf liefert, daß Wartungs- bzw. Austauscharbeiten an der betreffenden Walzenzapfenlagerung bzw. ihres Umfeldes notwendig werden.

Gemäß einer ersten Weiterbildung ist vorgesehen, daß die Prozeßgröße eine auf das Lager wirkende Kraft ist. Hierbei kann es sich sowohl um die in axialer Lagerrichtung wirkende Kraft als auch um die in radialer Lagerrichtung wirkende Kraft handeln. Für die Messung dieser Kräfte sind im Stand der Technik Kraftmeßlager in vielfältigen Variationen bekannt. Der vorgesehene gespeicherte Grenzwert für die maximal mögliche Lagerkraft wäre hier so zu bemessen, daß ein Ansprechen des Überwachungssystems, d.h. das Auslösen eines Signals, dann erfolgt, wenn z.B. durch Verschleiß im Lagerumfeld oder sonstige Unregelmäßigkeiten, wie z.B. Walzenschiefstellungen im Gerüst, auf die Walzenlagerung Kräfte einwirken, die ein unzulässiges Maß erreichen.

Alternativ oder additiv dazu kann weiterhin vorgesehen werden, daß die Prozeßgröße die sich im Lager befindliche Feuchtigkeit oder der Feuchtigkeitsgehalt des Schmierstoffs des Lagers ist. Es hat sich herausgestellt, daß Lagerschäden dann bevorzugt auftreten, wenn sich ein unzulässig hoher Feuchtigkeitsgehalt im Lager einstellt. Daher kann mit einem als solchen im Stand der Technik bekannten Feuchtigkeitssensor an geeigneten Stellen des Lagers oder des Umfelds der Wert der Feuchtigkeit gemessen und überwacht werden. Weiterhin ist es alternativ oder additiv möglich, die im Lager herrschende Temperatur zu überwachen. Dabei ist bevorzugt an die Temperatur des Außenrings gedacht, da diese in besonders einfacher Weise gemessen werden kann.

Weiterhin kann vorgesehen werden, daß die Prozeßgröße, die der Überwachung unterliegt, die elastische und/oder plastische Verformung des Gehäuses ist. Die Verformung kann dabei sowohl in Umfangsrichtung des Gehäuses gemessen werden, was dann den Wert für die Ovalität des Gehäuses liefern würde, als auch in Achsrichtung des Gehäuses festgestellt werden; in letzterem Fall wird die Zylindrizität des Gehäuses überwacht. Die hier zu messende Verformung des Gehäuses ergibt sich vorzugsweise als Überlagerung aus elastischer und ggfs. vorhandener plastischer Verformung. Es ist festgestellt worden, daß beim Erreichen gewisser Grenzwerte für die Verformung des Gehäuses die Lagerlebensdauer deutlich reduziert wird. Dies gibt einen zuverlässigen Hinweis auf eine notwendige Reparatur oder Instandsetzung des Gehäuses.

In ähnlicher Weise kann alternativ oder additiv vorgesehen werden, daß die Prozeßgröße die Schwingungsamplitude und/oder die Schwingungsfrequenz eines vorgegebenen Bereichs des Lagers ist. Des weiteren kann die Schwingungsbeschleunigung eines ausgewählten Lagerbereichs überwacht werden. Die Überwachung der Schwingungseigenschaft des Lagers und vorzugsweise deren statistische Auswertung (Amplituden, Frequenzen, Beschleunigungen) kann als Indiz dafür herangezogen werden, ab wann es notwendig wird, das Lager zu warten bzw. auszutauschen. Alternativ oder additiv kann des weiteren vorgesehen werden, als Prozeßgröße des Lagers dessen Drehzahl zu überwachen; dies ist besonders bei Stranggießanlagen von Bedeutung, da normalerweise die Drehzahlen der Walzen hier keiner besonderen Überwachung unterliegen. Der gemessene Wert wird nach einem weiterbildungsgemäßen Merkmal drahtlos übertragen, wobei bevorzugt sowohl eine Übertragung durch Induktion als auch eine solche durch Funk in Frage kommt.

Die Vorrichtung zum Überwachen einer Lageranordnung mit mindestens einem Lager in einem Gehäuse einer Walzenzapfenlagerung einer Walze in einer Stranggießanlage ist erfindungsgemäß durch die Merkmale des Anspruchs 9 definiert.

Als Sensoren, die die fragliche Prozeßgröße am Lager überwachen, kommen je nach Einsatzfall ein Kraftsensor, ein Feuchtigkeitssensor, ein Temperaturfühler, ein Verformungsaufnehmer (insbesondere in Form eines oder mehrerer Dehnungsmeßstreifen) und/oder ein Geschwindigkeits- oder Beschleunigungsaufnehmer in Frage.

Bei dem Lager handelt es sich bevorzugt um ein Wälzlager; speziell ist an ein zweireihiges Pendelrollenlager oder an ein ein- oder zweireihiges Toroidallager gedacht.

Weiterbildungsgemäß können die Mittel zum Zuleiten des gemessenen Wertes der Prozeßgröße an die Auswerteeinrichtung den Wert drahtlos, vorzugsweise durch Induktion oder Funk, übertragen.

Durch das erfindungsgemäße Konzept wird es möglich, verschiedene Prozeßgrößen in einer Walzenzapfenlagerung einer Walze in einer Stranggießanlage zu überwachen und gezielt auf die Notwendigkeit zu schließen, wann Maßnahmen ergriffen werden müssen, um das Lager zu warten bzw. auszutauschen. Auf diese Art und Weise können im richtigen Moment geeignete Aktivitäten eingeleitet werden, um bei beginnenden Lagerschäden einen Austausch der Lageranordnung vorzunehmen. Der gesamte Fertigungsprozeß in der Stranggießanlage kann dadurch optimiert werden. Dasselbe gilt für das Gehäuse und dessen Umfeld im Gerüst selber. Auch hier kann durch die erläuterten Maßnahmen sichergestellt werden, daß zum richtigen Zeitpunkt ein Austauschteil montiert wird. Durch die Messung und Beobachtung der in Rede stehenden Prozeßgrößen kann der Verschleiß im Bereich der Walzenzapfenlagerung sichtbar gemacht werden und automatisch zum richtigen Zeitpunkt signalisiert werden, daß Instandhaltungsmaßnahmen erforderlich sind. Dies bedeutet eine höhere Sicherheit hinsichtlich ungeplanter Stillstände sowie die Möglichkeit, Fehlerquellen direkt zu identifizieren.

In der Zeichnung ist ein Ausführungsbeispiel der Erfindung dargestellt.

Es zeigen:
- Figur 1: schematisch in dreidimensionaler Ansicht die Walzenanordnung einer Stranggießanlage,
- Figur 2: schematisch den Schnitt durch eine Walzenzapfenlagerung und die weiteren zur Überwachung dienenden Elemente.

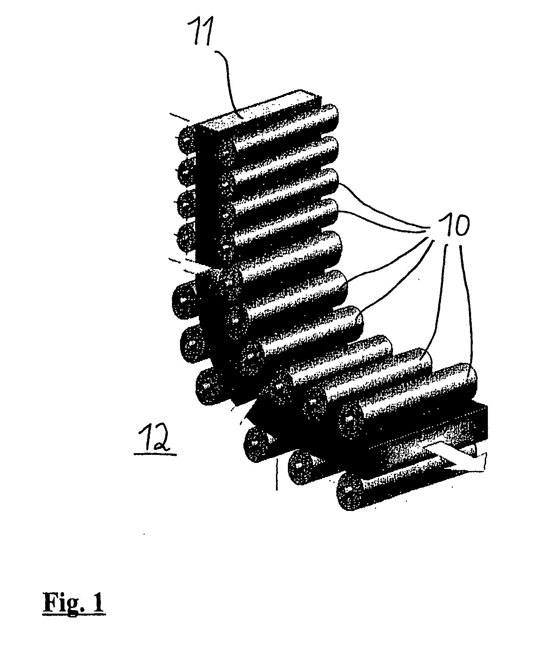

In Figur 1 ist schematisch in dreidimensionaler Ansicht eine Stranggießanlage 12 zu sehen. Aus einer nicht näher dargestellten Kokille kommt vertikal von oben heißes, in sich jedoch bereits formstabiles Metall in Form eines heißen Metallstrangs (siehe gegossenes Metall 11). Der Metallstrang muß von der vertikalen Richtung in die horizontale Richtung "umgebogen" werden, was erhebliche Kräfte erfordert, da die Formstabilität des Metalls 11 bereits erheblich ist. Hierfür wird ein System von Walzen 10 eingesetzt, das derart positioniert ist, daß es zu einem allmählichen Umbiegen des Metallstrangs 11 in die Horizontale kommt.

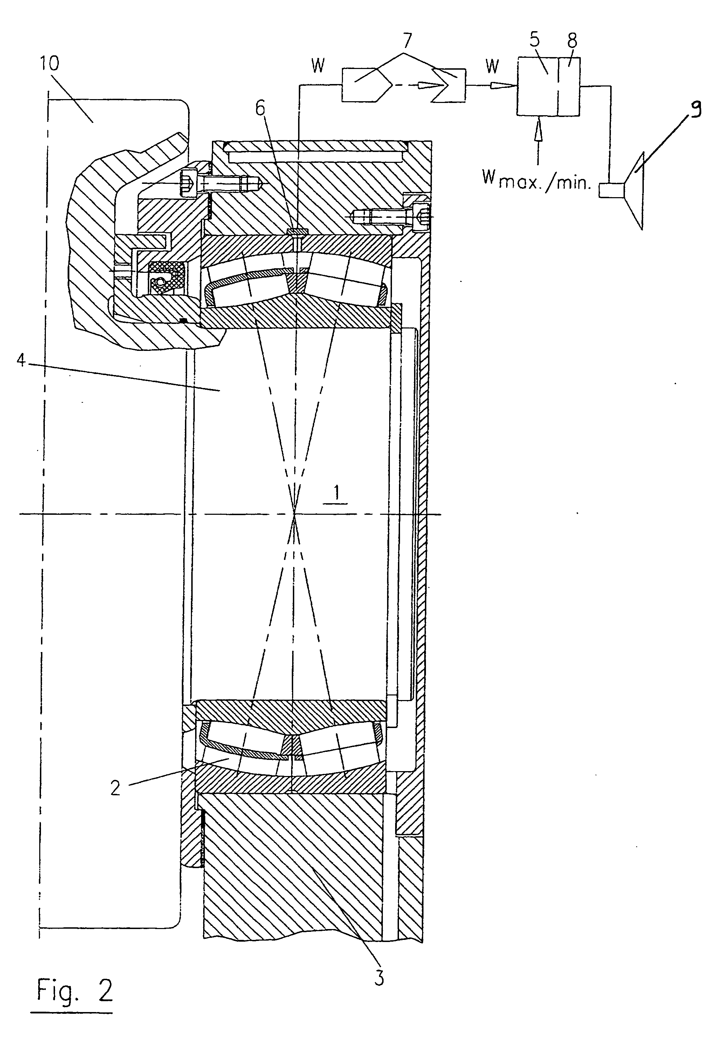

Die einzelnen Walzen 10 sind an ihrem jeweiligen Ende gelagert. Figur 2 zeigt das Ende einer der Walzen 10 mit ihrem Walzenzapfen 4. Dieser ist in einem Gehäuse 3 gelagert. Zur Lagerung dient die Lageranordnung 1, die im vorliegenden Fall aus einem Pendelrollenlager 2 besteht.

In die Lageranordnung 1 und/oder in das Gehäuse 3 ist an geeigneter Stelle ein Sensor 6 integriert. Sensoren dieser Art sind im Lagerbereich als solche hinlänglich bekannt. Es sind so z.B. Kraftmeßlager bekannt, die mit entsprechenden Kraftsensoren ausgerüstet sind. In ähnlicher Weise können Feuchtigkeits- oder Temperatursensoren in das Lager integriert werden. Gleichermaßen ist es möglich, durch entsprechende Anordnung und Zusammenschaltung von Dehnungsmeßstreifen die Verformung der Lageranordnung aufzunehmen. Schließlich können auch Beschleunigungs- oder Wegsensoren in das Lager integriert werden, um namentlich Schwingungen aufzuzeichnen.

Der Sensor 6 leitet die aufgenommene Prozeßgröße W an die Auswerteeinrichtung 5. Hierzu kommen Mittel 7 zum Zuleiten des gemessenen Wertes zum Einsatz. Durch den gestrichelten Pfeil in Figur 2 ist angedeutet, daß die Übertragung des Wertes der Prozeßgröße W auch drahtlos erfolgen kann, beispielsweise durch Funk oder Induktion.

Die Auswerteeinrichtung 5 erhält neben dem gemessenen Wert W der Prozeßgröße auch einen gespeicherten vorgegebenen Wert W_{max/min}. In den Mitteln 8 zum Vergleichen des gemessenen Wertes W mit dem vorgegebenen Wert W_{max/min} wird festgestellt, ob der gemessene Wert W noch im zulässigen Toleranzbereich (Sollwert) liegt, d.h. noch kleiner als ein zulässiger Maximalwert bzw. noch größer als ein zulässiger Minimalwert ist. Vorliegend kommt freilich überwiegend ein Vergleich des gemessenen Wertes mit einem vorgegebenen Maximalwert für Kraft, Feuchtigkeit, Temperatur oder Verformung in Frage.

Wenn der vorgegebene Toleranzbereich bzw. der vorgegebene Maximalwert für die gemessene Prozeßgröße überschritten wird, veranlassen die Mittel 9 die Auslösung eines Signals. Dies kann in mannigfaltiger Weise erfolgen, beispielsweise durch Anzeigelampen oder durch akustische Signale. Entscheidend ist, daß das Bedienpersonal der Stranggießanlage darüber informiert wird, daß zulässige Betriebsparameter im Lagerbereich überschritten wurden. Es kann dann veranlaßt werden, daß am Lager Instandhaltungsarbeiten vorgenommen werden, so daß es zu keinem Lagerausfall kommt.

Im Ausführungsbeispiel ist eine Lösung gezeigt, bei der - wie häufig - die Walze an ihrem Ende einen Zapfen aufweist, der durch die Lageranordnung gelagert wird. Genauso ist es allerdings denkbar, daß die Walze in ihren beiden Endbereichen je eine Innenbohrung aufweist, in die je ein Zapfen hineinragt, der am Gehäuse angebracht ist. In diesem Falle ist das Lager zwischen diesem Zapfen und der zylindrischen Innenfläche der Bohrung angeordnet.

### Bezugszeichen

- 1: Lageranordnung
- 2: Lager der Lageranordnung
- 3: Gehäuse
- 4: Walzenzapfen
- 5: Auswerteeinrichtung
- 6: Sensor
- 7: Mittel zum Zuleiten des gemessenen Wertes an die Auswerteeinrichtung
- 8: Mittel zum Vergleich des gemessenen Wertes mit dem vorgegebenen Wert
- 9: Mittel zum Auslösen eines Signals
- 10: Walze
- 11: gegossenes Metall
- 12: Stranggießanlage

- W: Prozeßgröße (Wert)
- W_{max/min}: gespeicherter, vorgegebener Wert für die Prozeßgröße

## Patentansprüche

1. Verfahren zum Überwachen einer Lageranordnung (1) mit mindestens einem Lager (2) in einem Gehäuse (3) einer Walzenzapfenlagerung einer Walze (10) in einer Stranggießanlage (12), wobei das Verfahren die Schritte aufweist:
a) Messen einer Prozeßgröße (W) am Lager (2) oder in einem dem Lager (2) benachbarten Bereich, nämlich eine auf das Lager (2) wirkende Kraft, die sich im Lager (2) befindliche Feuchtigkeit, den Feuchtigkeitsgehalt im Schmierstoff des Lagers (2) oder die Verformung des Gehäuses (3);
b) Zuleiten des gemessenen Wertes der Prozeßgröße (W) an eine Auswerteeinrichtung (5);
c) Vergleich des gemessenen Wertes mit einem gespeicherten vorgegebenen Wert (W_{max/min});
d) Auslösen eines Signals, sobald der gemessene Wert (W) den gespeicherten vorgegebenen Wert (W_{max/min}) über- oder untersteigt.

2. Verfahren nach Anspruch 1, **dadurch gekennzeichnet, dass** die Kraft die in axialer Lagerrichtung wirkende Kraft ist.

3. Verfahren nach Anspruch 1, **dadurch gekennzeichnet, dass** die Kraft die in radialer Lagerrichtung wirkende Kraft ist.

4. Verfahren nach Anspruch 1, **dadurch gekennzeichnet, dass** die Verformung des Gehäuses (3) in Umfangsrichtung des Gehäuses (3) gemessen wird.

5. Verfahren nach Anspruch 1, **dadurch gekennzeichnet, dass** die Verformung des Gehäuses (3) in Achsrichtung des Gehäuses (3) gemessen wird.

6. Verfahren nach einem der Ansprüche 1 bis 5, **dadurch gekennzeichnet, dass** der gemessene Wert (W) drahtlos übertragen wird.

7. Verfahren nach Anspruch 6, **dadurch gekennzeichnet, dass** die drahtlose Übertragung durch Induktion erfolgt.

8. Verfahren nach Anspruch 6, **dadurch gekennzeichnet, dass** die drahtlose Übertragung durch Funk erfolgt.

9. Vorrichtung zum Überwachen einer Lageranordnung (1) mit mindestens einem Lager (2) in einem Gehäuse (3) einer Walzenzapfenlagerung einer Walze (10) in einer Stranggießanlage (12), insbesondere zur Durchführung des Verfahrens nach einem der Ansprüche 1 bis 8, die aufweist:
- einen oder mehrere Sensoren (6), der bzw. die eine Prozeßgröße (W) am Lager (2) oder in einem dem Lager (2) benachbarten Bereich aufnehmen, nämlich eine auf das Lager (2) wirkende Kraft, die sich im Lager (2) befindliche Feuchtigkeit, den Feuchtigkeitsgehalt im Schmierstoff des Lagers (2) oder die Verformung des Gehäuses (3);
- Mittel (7) zum Zuleiten des gemessenen Wertes der Prozeßgröße (W) an eine Auswerteeinrichtung (5);
- Mittel (8) zum Vergleichen des gemessenen Wertes (W) mit einem gespeicherten vorgegebenen Wert (W_{max/min});
- Mittel (9) zum Auslösen eines Signals, sobald der gemessene Wert (W) den gespeicherten vorgegebenen Wert (W_{max/min}) über- oder untersteigt.

10. Vorrichtung nach Anspruch 9, **dadurch gekennzeichnet, dass** der Sensor (6) ein Dehnungsmeßstreifen ist.

11. Vorrichtung nach Anspruch 9 oder 10, **dadurch gekennzeichnet, dass** das Lager (2) ein Wälzlager ist.

12. Vorrichtung nach Anspruch 11, **dadurch gekennzeichnet, dass** das Lager (2) ein zweireihiges Pendelrollenlager ist.

13. Vorrichtung nach Anspruch 11, **dadurch gekennzeichnet, dass** das Lager (2) ein ein- oder zweireihiges Toroidallager ist.

14. Vorrichtung nach einem der Ansprüche 9 bis 13, **dadurch gekennzeichnet, dass** die Mittel (7) zum Zuleiten des gemessenen Wertes der Prozeßgröße (W) an die Auswerteeinrichtung (5) den Wert drahtlos, vorzugsweise durch Induktion oder durch Funk, übertragen.

## Claims

1. Method for monitoring a bearing arrangement (1) with at least one bearing (2) in a housing (3) of a roller journal bearing of a roller (10) in a continuous casting installation (12), **characterized in that** the method comprises the following-steps:
a) measurement of a process quantity (W) at the bearing (2) or in an area adjoining the bearing (2), namely a force acting on the bearing (2), the moisture present in the bearing (2), the moisture content of the lubricant for the bearing (2) or the deformation of the housing (3);
b) providing an evaluation device (5) with the measured value of the process quantity (W);
c) comparing the measured value with a stored preset value (W_{max/min}),
d) triggering a signal as soon as the measured value (W) exceeds or falls below the stored preset value (W_{max/min}).

2. Method according to claim 1 **characterized in that** the the force is the force acting in the axial bearing direction.

3. Method according to claim 1, **characterized in that** the force is the force acting in the radial bearing direction.

4. Method according to claim 1, **characterized in that** the deformation of the housing (3) is measured in the circumferential direction of the housing (3).

5. Method according to claim 1, **characterized in that** the deformation of the housing (3) is measured in the axial direction of the housing (3).

6. Method according to one of claims 1 to 5, **characterized in that** the measured value (W) is transmitted in a wireless manner.

7. Method according to claim 6, **characterized in that** the wireless transmission takes place by means of induction.

8. Method according to claim 6, **characterized in that** the wireless transmission takes place by means of radio.

9. Device for monitoring a bearing arrangement (1) with at least one bearing (2) in a housing (3) of a roller journal bearing of a roller (10) in a continuous casting installation (12), in particular for executing the method according to one of claims 1 to 8, **characterized by**:
- one or several sensors (6), which pick up a process quantity (W) at a bearing (2) or in an area surrounding the bearing (2), namely a force acting on the bearing (2), the moisture present in the bearing (2), the moisture content of the lubricant for the bearing (2) or the deformation of the housing (3);
- means (7) for conducting the measured value of the process quantity (W) to an evaluation device (5);
- means (8) for comparing the measured value (W) with a stored preset value (W_{max/min});
- means (9) for triggering a signal as soon as the measured value (W) exceeds or falls below the stored preset value (W_{max/min}).

10. Device according to claim 9, **characterized in that** the sensor (6) is a wire strain gauge.

11. Device according to claims 9 and 10, **characterized in that** the bearing (2) is a roller bearing.

12. Device according to claim 11, **characterized in that** the bearing (2) is a double row spherical roller bearing.

13. Device according to claim 11, **characterized in that** the bearing (2) is a single or double row toroidal bearing.

14. Device according to one of claims 9 to 13, **characterized in that** the means (7) for conducting the measured value of the process quantity (W) to the evaluation device (5) transmit the values in a wireless manner, preferably by induction or radio.

## Revendications

1. Procédé permettant de contrôler un ensemble palier (1) qui comprend au moins un palier (2) logé dans le boîtier (3) d'un montage à tourillons d'un cylindre (10) faisant partie d'une installation de coulée continue (12), ce procédé comportant les étapes suivantes:
a) mesure d'une grandeur de process (W) sur le palier (2) ou dans une zone proche de celui-ci, notamment une force s'exerçant sur le palier (2), l'humidité existant dans ce palier (2), la teneur en eau de l'agent de lubrification du palier (2) ou la déformation de ce palier,
b) envoi de la valeur mesurée de la grandeur de process (W) à un dispositif d'exploitation (5),
c) comparaison de la valeur mesurée à une valeur (W_{max/min}) prédéfinie qui a été mise en mémoire,
d) déclenchement d'un signal dès que la valeur mesurée (W) passe au-dessus ou en dessous de la valeur prédéfinie (W_{max/min}) qui a été mise en mémoire.

2. Procédé selon la revendication 1, **caractérisé en ce que** la force est celle qui agit selon la direction axiale du palier.

3. Procédé selon la revendication 1, **caractérisé en ce que** la force est celle qui agit selon la direction radiale du palier.

4. Procédé selon la revendication 1, **caractérisé en ce que** la déformation du boîtier (3) est mesurée selon la direction périphérique de celui-ci.

5. Procédé selon la revendication 1, **caractérisé en ce que** la déformation du boîtier (3) est mesurée selon la direction axiale de celui-ci.

6. Procédé selon une des revendications 1 à 5, **caractérisé en ce que** la valeur mesurée (W) est transmise sans fil.

7. Procédé selon la revendication 6, **caractérisé en ce que** la transmission sans fil s'effectue par induction.

8. Procédé selon la revendication 6, **caractérisé en ce que** la transmission sans fil s'effectue par radio.

9. Dispositif permettant de contrôler un ensemble palier (1) comprenant au moins un palier (2) logé dans le boîtier (3) d'un montage à tourillons d'un cylindre (10) dans une installation de coulée continue (12), en particulier pour la mise en æuvre du procédé selon une des revendications 1à 8, qui comprend
- un ou plusieurs capteur (6) qui saisissent par exemple une grandeur de process (W) sur le palier (2) ou dans une zone proche de celui-ci, notamment une force s'exerçant sur le palier (2), l'humidité dans ce palier (2), la teneur en eau de l'agent de lubrification du palier (2) ou la déformation de ce palier,
- des moyens (7) pour envoyer la valeur mesurée de la grandeur de process (W) à un dispositif d'exploitation (5),
- des moyens (8) pour comparer la valeur mesurée (W) à une valeur (W_{max/min}) prédéfinie qui a été mise en mémoire,
- des moyens (9) pour déclencher un signal, dès que la valeur mesurée (W) passe au-dessus ou en dessous de la valeur (W_{max/min}) prédéfinie qui a été mise en mémoire.

10. Dispositif selon la revendication 9, **caractérisé en ce que** le capteur (6) est un extensomètre.

11. Dispositif selon la revendication 9 ou 10, **caractérisé en ce que** le palier (2) est un palier à rouleaux.

12. Dispositif selon la revendication 11, **caractérisé en ce que** le palier (2) est un roulement oscillant à double rangée de rouleaux.

13. Dispositif selon la revendication 11, **caractérisé en ce que** le palier (2) est un roulement oscillant toroïdal à double rangée.

14. Dispositif selon une des revendications 9 à 13, **caractérisé en ce que** les moyens (7), pour amener la valeur mesurée de la grandeur de process (W) au dispositif d'exploitation (5), transmettent cette valeur sans fil, de préférence par induction ou par radio.
